# EUROPEAN PATENT SPECIFICATION

(11) **EP 3 441 887 B1**
(45) Date of publication and mention of the grant of the patent: **07.06.2023**
(21) Application number: 16897834.4
(22) Date of filing: 04.04.2016
(51) Int. Cl.: G06F 9/451, G06F 40/58

(54) **TRANSLATION SYSTEM**
ÜBERSETZUNGSSYSTEM
SYSTÈME DE TRADUCTION

(43) Date of publication of application: 13.02.2019
(73) Proprietor: WOVN TECHNOLOGIES, INC., Tokyo 1080073 (JP)
(72) Inventor: HAYASHI, Takaharu, Minato-ku, Tokyo 1080073 (JP); SANDFORD, Jeffrey Thomas, Minato-ku, Tokyo 1080073 (JP)
(74) Representative: EIP
(86) International application number: PCT/JP2016/061028
(87) International publication number: WO 2017/175275

(56) References cited:
- WO-A1-01/57722
- WO-A1-2012/115507
- JP-A- 2002 091 963
- JP-A- 2003 141 018
- JP-A- 2009 181 539
- JP-A- 2015 005 011
- JP-A- 2015 005 011

## Description

### Technical Field

The present invention relates to a translation system.

### Background Art

Websites published on the internet can be accessed by computers anywhere in the world. However, the web pages constituting a website operated in a foreign country are often created in a language other than the native language of that country. These web pages are translated in order to provide easy access to the website (see, for example, Patent Document 1).

### Citation List

### Patent Literature

Patent Document 1: JP 2013-190975 A

WO 2012/115507 A1 describes a website translator system for providing a translated version of a webpage of a website in response to an HTTP request from a client computer. The translator system is arranged in between the client computer and the server that hosts the website. The website translator replaces text content in the HTML information that is received from the server and sends modified HTML information to the client computer as the translated version of the webpage.

JP 2015 005011 A describes an information processing apparatus for estimating the accuracy of translation of a word in a search query that requires translation. An accuracy estimation module is connected to a parallel translation storage module, a log storage module, and a parallel translation change module. The accuracy estimation module uses a log stored in the log storage module to determine the accuracy of the translation stored in the parallel translation storage module corresponding to the word in the search query.

### Summary of Invention

### Technical Problem

However, in the configuration disclosed in Patent Document 1, a system for translating websites has to be provided for each website, and it is sometimes difficult to apply this system to small-scale websites due to cost factors.

It is an object of the present invention to provide a translation system that is able to translate a web page by a simple alteration of a website.

### Solution to Problem

According to one aspect of the present invention, a translation system according to claim 1 is provided. According to a second aspect of the present invention, a translation method according to claim 6 is provided.

In the present invention, "unit" refers not only to a physical means but also to the implementation of the function of the "unit" using software. The functions of a single "unit" or device may be implemented by two or more physical means or devices, or the functions of two or more "units" and devices may be realized by a single physical means or device.

### Advantageous Effects of Invention

The present invention is able to provide a translation system that is able to translate a web page by a simple alteration of a website.

### Brief Description of Drawings

[FIG. 1]

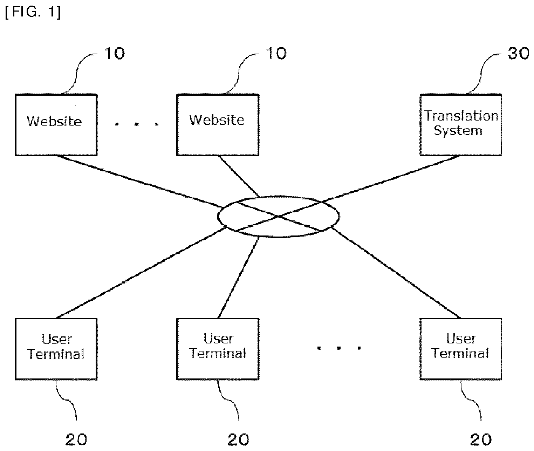

   FIG. 1 is a diagram showing a configuration of the information processing system in the first embodiment of the present invention.
[FIG. 2]

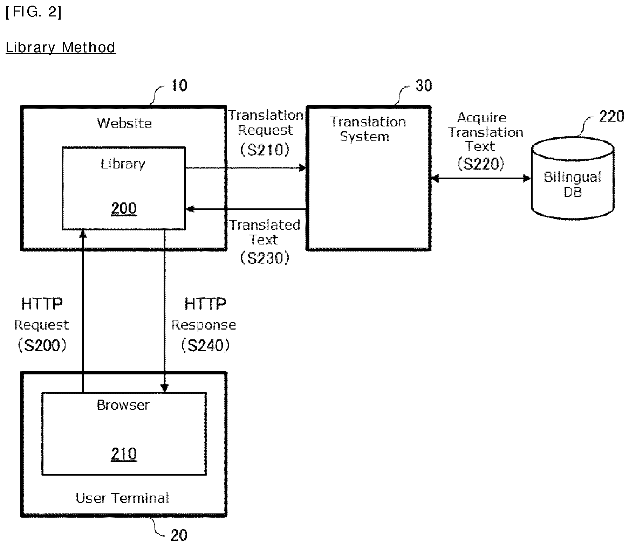

   FIG. 2 is a diagram summarizing the library method in the first embodiment.
[FIG. 3]

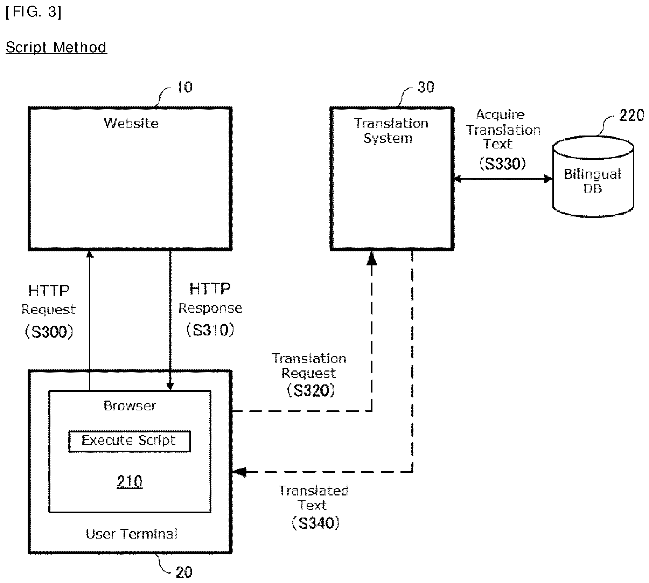

   FIG. 3 is a diagram summarizing the script method in the first embodiment.
[FIG. 4]

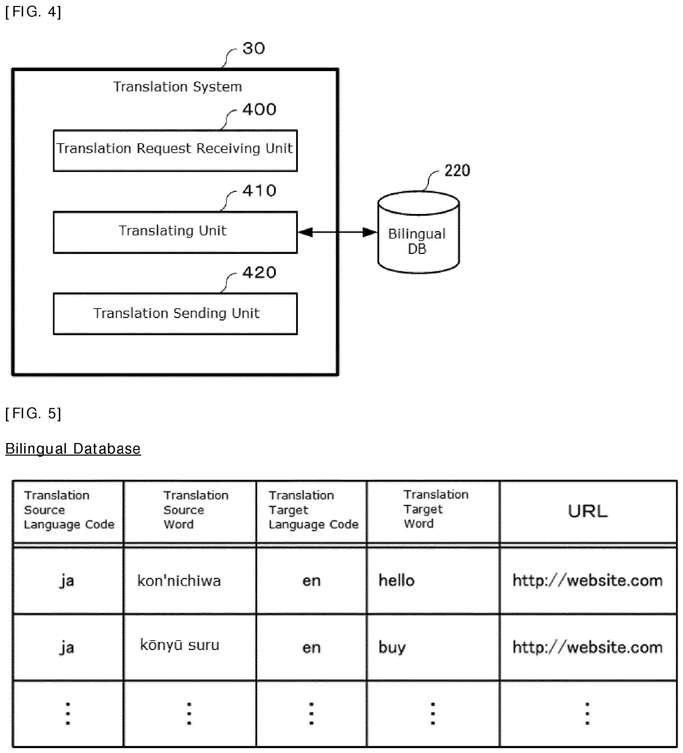

   FIG. 4 is a diagram showing an example of a configuration of the translation system 30 in the first embodiment.
[FIG. 5]
   FIG. 5 is a diagram showing an example of the structure of a bilingual database 220.
[FIG. 6]

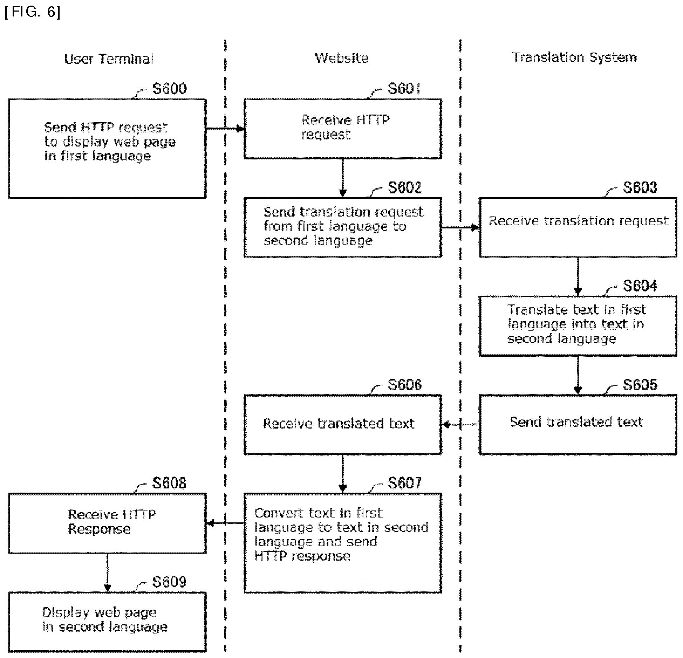

   FIG. 6 is a flowchart showing an example of translation processing in the first embodiment.
[FIG. 7]

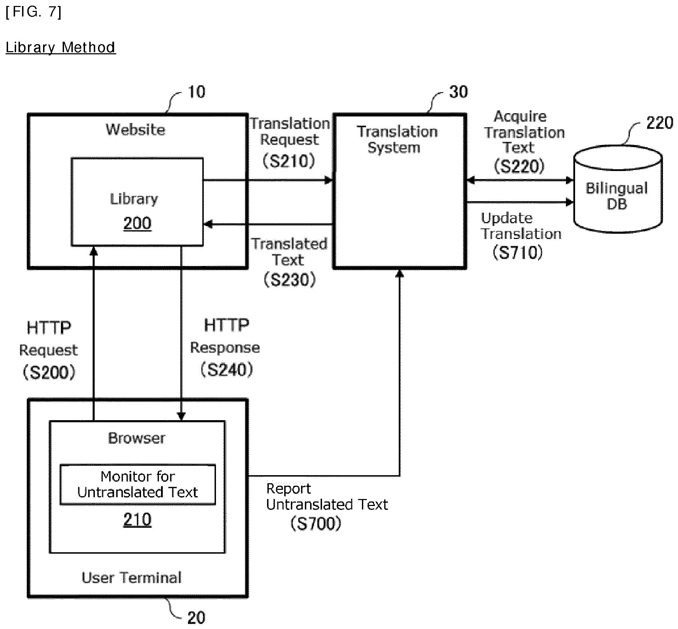

   FIG. 7 is a diagram summarizing the library method in the second embodiment.
[FIG. 8]

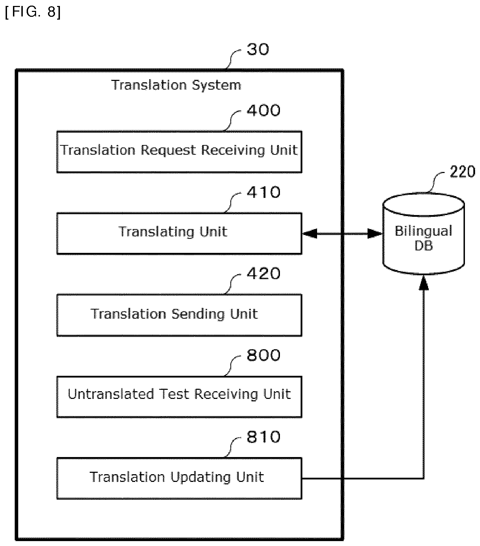

   FIG. 8 is a diagram showing an example of a configuration of the translation system 30 in the second embodiment.
[FIG. 9]

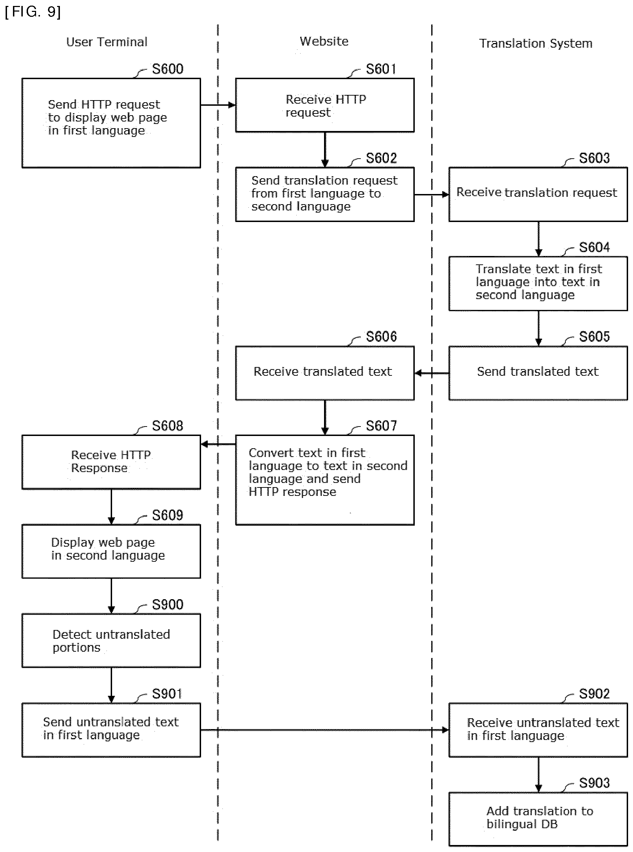

   FIG. 9 is a flowchart showing an example of translation processing in the second embodiment.
[FIG. 10]

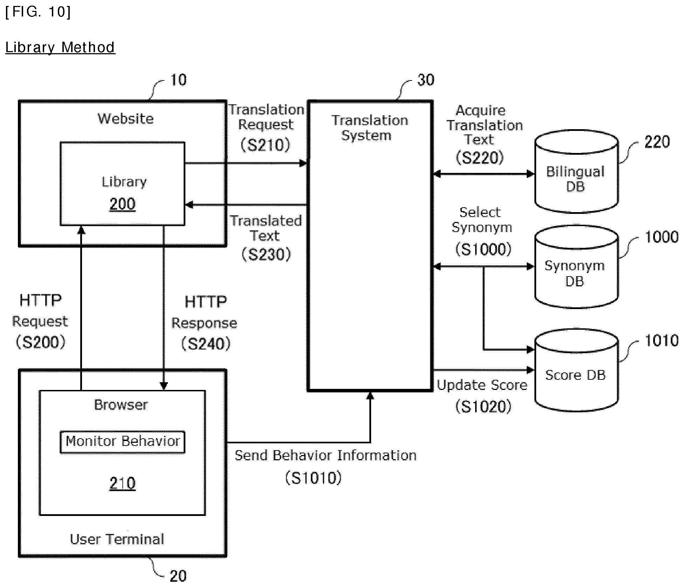

   FIG. 10 is a diagram summarizing the library method in the third embodiment.
[FIG. 11]

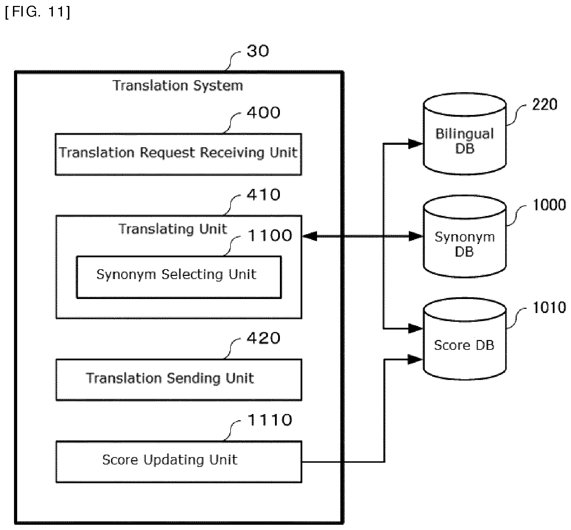

   FIG. 11 is a diagram showing an example of a configuration of the translation system 30 in the third embodiment.
[FIG. 12]

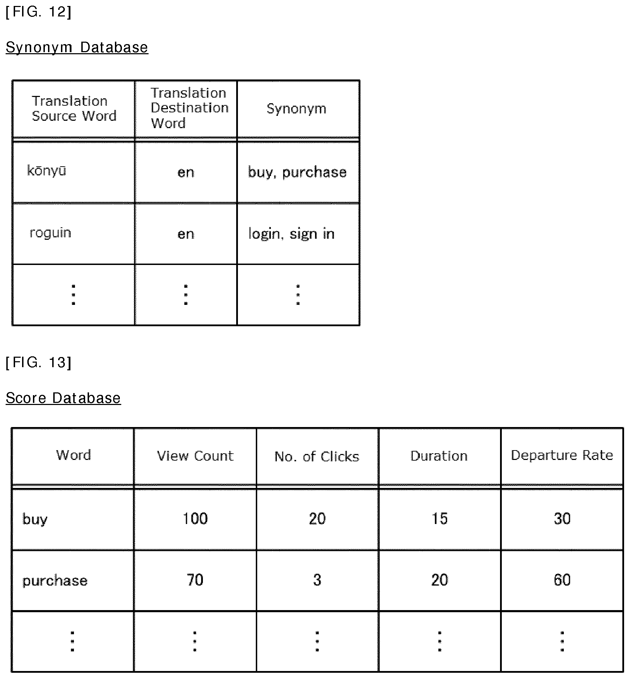

   FIG. 12 is a diagram showing an example of the structure of a synonym database 1000.
[FIG. 13]
   FIG. 13 is a diagram showing an example of the structure of a score database 1010.
[FIG. 14]

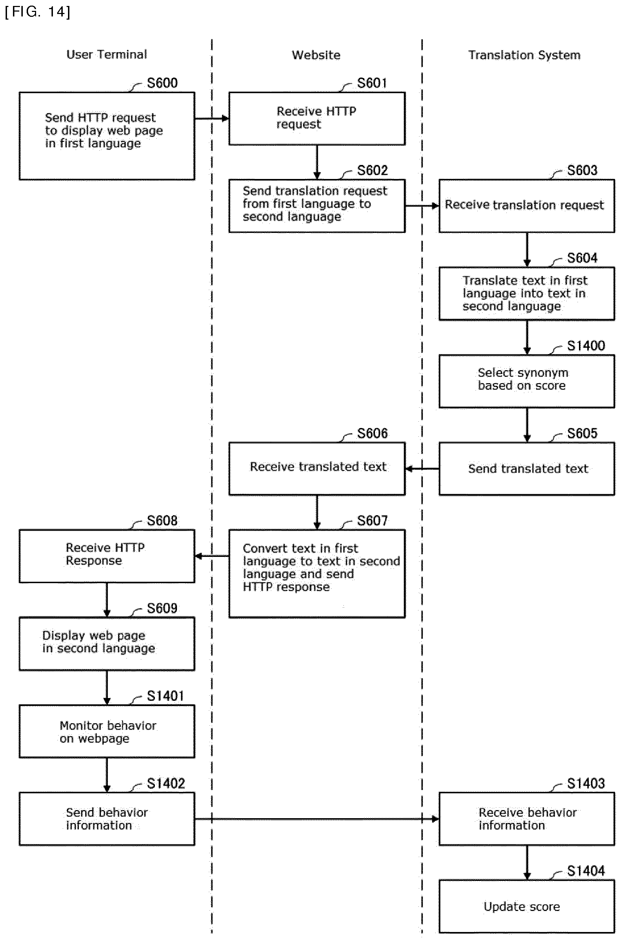

   FIG. 14 is a flowchart showing an example of translation processing in the third embodiment.

### Description of Embodiments

### First Embodiment

The following first embodiment is not according to the invention and is present for illustration purposes only. FIG. 1 is a diagram showing a configuration of the information processing system in the first embodiment of the present invention. As shown in FIG. 1, the information processing system includes websites 10, user terminals 20, and a translation system 30. The websites 10, user terminals 20, and translation system 30 are connected via a network such as the internet to enable communication.

The websites 10 provides web pages to the user terminals 20 and are equipped with computers such as web servers, database servers, and application servers. One or more computers may be used by each website 10. The websites 10 can provide web pages to user terminals 20 based on requests from user terminals 20. By using the translation system 30, websites 10 can provide translated pages to user terminals 20.

A user terminal 20 is a computer used by a user to access a website 10. The user terminal 20 can be, for example, a personal computer, tablet, or smartphone. The user can access a website 10 by operating a browser installed on the user terminal 20.

The translation system 30 provides a web page translation service to websites 10. The translation system 30 includes one or more computers. A translation system 30 is not provided for each website 10 but is shared with the plural websites 10.

The following is an explanation of a translation method for web pages using a translation system 30. In the present embodiment, as examples of the translation method, two types of translation method are used, namely, the "library method" and the "script method".

FIG. 2 is a diagram summarizing the library method in the first embodiment. In the library method, a library 200 for utilizing the translation system 30 is incorporated into a website 10. The user inputs a URL (Universal Resource Locator) indicating a web page of the desired website 10 in the browser 210 on the user terminal 20. As a result, an HTTP (Hyper Text Transfer Protocol) request is sent to the website 10 from the user terminal 20 (S200).

When the website 10 receives an HTTP request from a user terminal 20, the website 10 sends a translation request to translate the first language text (for example, Japanese) included in the web pages indicated by the URL into the second language text (for example, English) (S210). The following is an example of the format of this translation request.
url: http://website.com, src: ja, dst: en
"url: http://website.com" is the URL of the web page to be translated, "src: ja" is the translation source language code, and "dst: en" is the translation target language code. In the case of the translation target language is fixed, a translation target language code does not have to be included. In the case of the source language can be determined by analyzing the web page, translation source language does not have to be included.

When the translation system 30 received a translation request from a website 10 (client device), the translation system 30 obtains the first language text to be translated on the web page to be translated based on the URL included in the translation request. For example, the text in the first language to be translated is the text included in the body of the web page (< BODY> ~ </BODY> ). The translation system 30 acquires translated sentence translated first language text into the second language text by referring to a bilingual database (DB) 220 storing words and phrases in the first language associated with words and phrases in the second language constituting translated text of the words and phrases in the first language, and (S220).Then, the translation system 30 sends the translated text to the website 10 (S230). The following is an example of the format of the translated text sent to the website 10.
src: Kon'nichiwa, dst: Hello, xpath:/body/p/text()
"src: Kon'nichiwa" is the translation source text in the first language, "dst: Hello" is the translation target text in the second language, and "xpath:/body/p/text()" is the code for identifying the location of the text to be translated on the web page.

The website 10 converts the first language text on the web page into the second language text received from the translation system 30 and sends an HTTP response to the user terminal 20 (S240). As a result, a translated web page is displayed in the browser 210 on the user terminal 20.

FIG. 3 is a diagram summarizing the script method in the first embodiment. In the script method, the script for utilizing the translation system 30 is embedded into a web page. The user inputs a URL in the browser 210 on the user terminal 20 indicating a web page of the target website 10. As a result, an HTTP request is sent to the website 10 from the user terminal 20 (S300).

When the website 10 received an HTTP request from a user terminal 20, the website 10 sends an HTTP response to the user terminal 20 for displaying the web page indicated by the URL (S310). As a result, a translated web page including translation source first language text is displayed in the browser 210 on the user terminal 20. And, the script is embedded in the web page for utilizing the translation system 30. This script is executed by the browser 210 and a translation request is sent from the user terminal 20 to the translation system 30. The format of translation requests is the same as the the library method.

As the library method, the translation system 30 acquires translated sentence translated the first language text into the second language text by referring to the bilingual database (DB) 220 based on the URL included in the translation request received from the user terminal (client device) and (S330). Then, the translation system 30 sends the translated sentence to the user terminal 20 (S340). The format of translated sentence sent to the user terminals 20 is the same as the format of translated sentence sent to the websites 10 in the library method.

On the user terminal 20, the text on the web page is converted into the second language text received from the translation system 30 by the script executed in the browser 210. As a result, a translated web page is displayed in the browser 210 on the user terminal 20.

The following is an explanation of a configuration using the library method. This configuration can also be implemented using the script method.

FIG. 4 is a diagram showing an example of the configuration of the translation system 30 in the first embodiment. The translation system 30 includes a translation request receiving unit 400, a translating unit 410, and a translation sending unit 420. Each unit can be implemented in a computer including memory and a processor, when the processor executes a program stored in the memory, for example.

The translation request receiving unit 400 receives a translation request including the URL of a web page displayed the first language text from a website 10 (client device). As explained above, the translation request contains a language code for the first language, which is the translation source language, and a language code for the second language, which is the translation target language, in addition to the URL.

The translating unit 410 translates first language text on the web page indicated by the URL included in the translation request into the second language text by referring to the bilingual database 220. FIG. 5 is a diagram showing an example of the structure of a bilingual database 220. In the example shown in FIG. 5, the bilingual database 220 includes translation source language codes, translation source words and phrases, translation target language codes, translation target words and phrases, and URLs. URLs are provided to customize translations for each website. For example, in the example shown in FIG. 5, the "kon'nichiwa" is translated to "hello" at http://website.com. In another case,the translation can be registered, "kon'nichiwa" is translated to "hi" at http://another.com. In other words, the translating unit 410 can obtain a translation in response to the URL included in the translation request from the bilingual database 220.

The translation sending unit 420 sends the second language text translated by the translating unit 410 to the website 10 (client device).

FIG. 6 is a flowchart showing an example of translation processing in the first embodiment. First, the browser 210 in the user terminal 20 sends an HTTP request to display a website of the first language to the website 10 (S600).

The website 10 receives the HTTP request from the user terminal 20 (S601). Then, the website 10 sends a translation request for translating the first language on the webpage into a second language, to the translation system 30(S602).

The translation request receiving unit 400 in the translation system 30 receives the translation request from the website 10 (S603). Based on this translation request, the translating unit 410 in the translation system translates the first language text on the web page into the second language one(S604). Then, the translation sending unit 420 in the translation system 30 sends the translated sentence to the website 10 (S605).

The website 10 receives the translated sentence from the translation system 30 (S606). The website 10 converts the first language text on the web page into the second language text then sends the HTTP response to the user terminal 20 (S607).

The browser 210 in the user terminal 20 receives the HTTP response from the website 10 (S608). As a result, the webpage translated into the second language is displayed on the browser 210 (S609).

According to the first embodiment above, it is possible to translate many websites by making the simple alteration that is incorporating the library or the script.

Also, it is possible to customize translations for each website by providing items indicating the website in a bilingual database 220.

### Second Embodiment

The following is an explanation of a second embodiment of the present invention. The explanation about common parts with the first embodiment is omitted. The similar architecture with the first embodiment is marked with symbols and omitted to explain.

FIG. 7 is a diagram summarizing the library method in the second embodiment. The process from the HTTP request (S200) to the HTTP response (S240) is the same as the process in the first embodiment (FIG. 2). In the second embodiment, the script is embedded in a web page to search for untranslated text. For example, there is any possibility of existing untranslated text on a web page displayed on a browser 210, on the web page updated dynamically. When untranslated text is detected by the script, the untranslated first language text is sent to the translation system 30 (S700). Then, translation system 30 updates the bilingual database 220 based on this report (S710).

FIG. 8 is a diagram showing the configuration of the translation system 30 in the second embodiment. In addition to the configuration shown in FIG. 4, this translation system 30 includes the untranslated text receiving unit 800 and the translation updating unit 810.

The untranslated text receiving unit 800 receives untranslated first language text included in the webpage from the user terminal 20 displaying the webpage translated into the second language.

The translation updating unit 810 associates first language words or phrases corresponding to the untranslated text with second language words or phrases and registers the association in the bilingual database 220.

FIG. 9 is a flowchart showing an example of translation processing in the second embodiment. The process from step S600 to step S609 is the same as the process in the first embodiment (FIG. 6).

In the user terminal 20, the script searching for untranslated text on the web page is executed on the browser. Then, when the untranslated text is searched (S900), the untranslated first language text is sent from the user terminal 20 to the translation system 30 (S901).

The untranslated text receiving unit 800 in the translation system 30 receives the untranslated first language text from the user terminal 20 (S902). The translation updating unit 810 in the translation system 30 registers the translation corresponding to the untranslated text to the bilingual database 220 (S903).

According to the second embodiment above, it is possible to enrich a translation by adding a translation of untranslated text to the bilingual database 220.

### Third Embodiment

The following is an explanation of a third embodiment of the present invention. The explanation about common parts with the first embodiment is omitted. The similar architecture with the first embodiment is marked with symbols and omitted to explain.

FIG. 10 is a diagram summarizing the library method in the third embodiment. In the third embodiment, the translation system 30 acquires translated text based on the bilingual database 220 (S220), and selects a synonym from a plurality of second language synonyms (for example, "buy" and "purchase") corresponding to the first language word (for example, "ko̅nyu̅") (S1000) by referencing a synonym database (DB) 1000. The synonym can be selected based on a score stored in a score database (DB) 1010, for example. The translation system 30 sends the translated text including the selected synonym to the website 10 (S230).

In the third embodiment, the script monitoring the user behavior is embedded in a web page. For example, the user behavior is clicks on the web page, time spent on the web page, and leaving the web page. The user behavior information detected by the script is sent from the user terminal 20 to the translation system 30 (S1010). The translation system 30 updates the score related to the user behavior based on this behavior information (S1020).

FIG. 11 is a diagram showing an example of the configuration of the translation system 30 in the third embodiment. In addition to the configuration shown in FIG. 4, this translation system 30 comprises the synonym selecting unit 1100 and the score updating unit 1110.

The synonym selecting unit 1100 implements a part of functions in the translating unit 410. The synonym selecting unit 1100 references the synonym database 1000, and selects a first synonym (for example, "buy") for one translation request (the first translation request) and a second synonym (for example, "purchase") for another translation request (the second translation request) as the translation for a first word included in the first language text(for example, "ko̅nyu̅"). The translating unit 410 sends the translated text used the selected synonym to the website 10. FIG. 12 is a diagram showing an example of the structure of a synonym database 1000. In the example shown in FIG. 12, the synonym database 1000 includes translation source words and phrases, translation destination language codes, and synonyms. For example, two synonyms, "buy" and "purchase" are registered as translations for "ko̅nyu̅". Further, two synonyms "login" and "sign in" are registered as translations for "roguin". The number of synonyms is not limited to two, and there may be three or more.

For example, synonyms can be selected by the synonym selecting unit 1100 based on scores stored in a score database 1010. FIG. 13 is a diagram showing an example of the structure of a score database 1010. In the example shown in FIG. 13, the score database 1010 includes words and phrases, view counts, numbers of clicks, duration of stays, and departure rates. "View counts" means the number of times a website containing a certain word or phrase is displayed. "Number of clicks" means the number of times a click operation is performed on a website (or the number of times a button displayed the word or phrase is clicked). "Duration of stay" means the amount of time a user remains on a website, and "departure rate" means the proportion of users who moved on to another web page or closed the browser without performing a certain operation on the web page (such as clicking a button).

The synonym selecting unit 1100 can determine the score for each word or phrase based on one or more items in the score database 1010. When the synonym selecting unit 1100 sends translated text for a web page to a website 10, selects the highest score synonym as the best translation by tentatively determining with high ratio, on the other hand uses the remaining proportion to measure the effectiveness of each synonym. For example, in the case of "buy", "purchase" and "add to cart" are registered as synonyms for translating "ko̅nyu̅" and the score of "buy" is the highest, "buy" will be selected with high ratio (for example, 95% of the time). In order to measure the effectiveness of each of the three synonyms "buy", "purchase" and "add to cart", each of the synonyms is selected, for example, one-third of the time in the remaining ratio (for example, 5%).

The synonym selecting unit 1100 does not have to select a second language synonym for all words and phrases included in the first language text on the website. For example, the synonym selecting unit 1100 can select second language synonyms for words and phrases displayed in a specific location on the website (such as on a button) or for specific words and phrases that have an impact on the users behavior (for example, "ko̅nyu̅").

The score updating unit 1110 receives user behavior information on a web page from user terminals 20 displaying the web page translated into the second language, and updates the score database 1010 storing the scores for each second language synonym based on the behavior information.

FIG. 14 is a flowchart showing an example of translation processing in the third embodiment. The explanation about common parts with flowchart shown in FIG. 6 is omitted.

The translation request receiving unit 400 in the translation system 30 receives a translation request from a website 10 (S603). The translating unit 410 in the translation system 30 translates the first language text on a web page into the second language text based on the translation request (S604). Then, the synonym selecting unit 1100 selects synonyms for the object of words or phrases included in the first language text based on the scores stored in the score database 1010 (S1400). The translation sending unit 420 in the translation system 30 sends the translated sentence including selected synonyms to the website 10 (S605). The translation sending unit 420 can output information indicating that synonyms were selected by the synonym selecting unit 1100 for verification of effectiveness with the translated text. This information is included in the HTTP response to the user terminal 20.

In the user terminal 20, the script to monitor the user behavior is executed in the browser (S1401). Then, user behavior information is sent from the user terminal 20 to the translation system 36 (S1402). It is no problem that monitoring of the user behavior by the user terminal 20 is performed only when a synonym is selected for verification of effectiveness.

The score updating unit 1110 in the translation system 30 receives user behavior information from the user terminal 20 (S1403). Then, the score updating unit 1110 updates the score stored in the score database 1010 (S1404) based on user behavior information.

According to the third embodiment above, it is possible to analyze user behavior for each synonym. For example, by analyzing the user behavior, it is possible to select a translation which has users take desired action(for example, behavior to purchase a product).

### Reference Signs List

10: Website
20: User terminal
30: Translation system
200: Library
210: Browser
220: Bilingual database
400: Translation request receiving unit
410: Translating unit
420: Translation sending unit
800: Untranslated text receiving unit
810: Translation updating unit
1000: Synonym database
1010: Score database
1100: Synonym selecting unit
1110: Score updating unit

## Claims

1. A translation system (30) comprising:
a translation request receiving unit (400) for receiving, from a web server (10) or a user terminal (20), a translation request including a Universal Resource Locator, URL, of a web page in which text in a first language is displayed;
a translating unit (410) for translating the text in the first language included in the web page indicated by the URL into text in a second language by referring to a bilingual database (220) storing words and phrases in the first language associated with words and phrases in the second language constituting translated text of the words and phrases in the first language;
a translation sending unit (420) for sending the translated text in the second language to the web server (10) or the user terminal (20);
an untranslated text receiving unit (800) for receiving, from the user terminal (20), untranslated text in the first language included in the web page translated into the second language, the untranslated text being detected by a script embedded in the web page executed on the user terminal (20) on the web page updated dynamically; and
a translation updating unit (810) for associating a word or phrase in the first language corresponding to the untranslated text with a word or phrase in the second language constituting a translation of the word or phrase in the first language and registering the association in the bilingual database (220);
wherein URLs are included in the bilingual database (220), the URLs associating words and phrases in the first language with words and phrases in the second language, thereby to customize translations for the URLs included in the bilingual database (220); and
the translating unit (410) is for translating text in the first language into text in the second language based on the words and phrases in the first language and the words and phrases in the second language associated in the bilingual database by the URL included in the translation request.

2. The translation system (30) according to claim 1, wherein a language code indicating the translation target language is included in the translation request, and the translating unit is for translating the text in the first language into text in the second language indicated by the language code.

3. The translation system (30) according to claim 1 or claim 2, wherein:
the translating unit (410) is configured to select, for a first translation request, a first synonym in the second language as the translation for a first word or phrase included in the text in the first language, and is configured to select, for a second translation request, a second synonym in the second language, by referring to a synonym database storing synonyms of words and phrases in the second language;
the translation system further comprises a score updating unit (1110) for receiving, from a first user terminal on which a first web page including the first synonym is displayed based on the first translation request, first behavior information indicating the behavior of the user on the first web page, and for receiving, from a second user terminal on which a second web page including the second synonym is displayed based on the second translation request, second behavior information indicating the behavior of the user on the second web page; and
wherein the score updating unit (1110) is configured to update a score database (1010) storing the score for the first synonym and the second synonym based on the first behavior information and the second behavior information.

4. The translation system (30) according to claim 3, wherein the score for the first synonym is higher than the score for the second synonym, and the ratio at which the first synonym is selected is higher than the ratio at which the second synonym is selected.

5. A translation method comprising the computer-executed steps of:
receiving (S603) a translation request from a web server (10) or a user terminal (20), the translation request including a Universal Resource Locator, URL, of a web page in which text in a first language is displayed;
translating (S604) the text in the first language included in the web page indicated by the URL into text in a second language by referring to a bilingual database (220) storing words and phrases in the first language associated with words and phrases in the second language constituting translated text of the words and phrases in the first language;
sending (S605) the translated text in the second language to the web server (10) or the user terminal (20);
receiving (S902), from the user terminal (20), untranslated text in the first language included in the web page translated into the second language, the untranslated text being detected by a script embedded in the web page executed on the user terminal (20) on the web page updated dynamically; and
associating a word or phrase in the first language corresponding to the untranslated text with a word or phrase in the second language constituting a translation of the word or phrase in the first language and registering (S903) the association in the bilingual database (220),
wherein URLs are included in the bilingual database (220), the URLs associating words and phrases in the first language with words and phrases in the second language, thereby to customize translations for the URLs included in the bilingual database (220); and
the translating unit (410) is for translating text in the first language into text in the second language based on the words and phrases in the first language and the words and phrases in the second language associated in the bilingual database by the URL included in the translation request.

## Patentansprüche

1. Übersetzungssystem (30), umfassend:
eine Übersetzungsanforderungsempfangseinheit (400) zum Empfangen, von einem Webserver (10) oder einem Benutzerendgerät (20), einer Übersetzungsanforderung, die einen einheitlichen Ressourcenanzeiger (Universal Resource Locator - URL) einer Webseite beinhaltet, in der Text in einer ersten Sprache angezeigt wird;
eine Übersetzungseinheit (410) zum Übersetzen des Texts in der ersten Sprache, die in der Webseite beinhaltet ist, die durch den URL angegeben wird, in Text in einer zweiten Sprache durch Bezugnehmen auf eine zweisprachige Datenbank (220), die Wörter und Ausdrücke in der ersten Sprache speichert, die Wörtern und Ausdrücken in der zweiten Sprache zugeordnet sind, die den übersetzten Text der Wörter und der Ausdrücke in der ersten Sprache darstellt;
eine Übersetzungssendeeinheit (420) zum Senden des übersetzten Texts in der zweiten Sprache an den Webserver (10) oder das Benutzerendgerät (20);
eine Empfangseinheit (800) für einen nicht übersetzten Text zum Empfangen, von dem Benutzerendgerät (20), von dem nicht übersetzten Text in der ersten Sprache, die in der Webseite beinhaltet ist, die in die zweite Sprache übersetzt wird, wobei der nicht übersetzte Text durch ein Skript erkannt wird, das in der Webseite eingebettet ist, die auf dem Benutzerendgerät (20) auf der Webseite ausgeführt wird, die dynamisch aktualisiert wird; und
eine Übersetzungsaktualisierungseinheit (810) zum Zuordnen eines Worts oder eines Ausdrucks in der ersten Sprache, die dem nicht übersetzten Text entspricht, zu einem Wort oder einem Ausdruck in der zweiten Sprache, die eine Übersetzung des Worts oder des Ausdrucks in der ersten Sprache darstellt, und Registrieren der Zuordnung in der zweisprachigen Datenbank (220);
wobei URLs in der zweisprachigen Datenbank (220) beinhaltet sind, wobei die URLs Wörter und Ausdrücke in der ersten Sprache Wörtern und Ausdrücken in der zweiten Sprache zuordnen, wobei dadurch Übersetzungen für die URLs angepasst werden, die in der zweisprachigen Datenbank (220) beinhaltet sind; und
die Übersetzungseinheit (410) zum Übersetzen von Text in der ersten Sprache in Text in der zweiten Sprache basierend auf den Wörtern und den Ausdrücken in der ersten Sprache und den Wörtern und den Ausdrücken in der zweiten Sprache dient, die in der zweisprachigen Datenbank durch den URL zugeordnet werden, der in der Übersetzungsanforderung beinhaltet ist.

2. Übersetzungssystem (30) nach Anspruch 1, wobei ein Sprachcode, der die Übersetzungszielsprache angibt, in der Übersetzungsanforderung beinhaltet ist und die Übersetzungseinheit zum Übersetzen des Texts in der ersten Sprache in Text in der zweiten Sprache dient, die durch den Sprachcode angegeben ist.

3. Übersetzungssystem (30) nach Anspruch 1 oder 2, wobei:
die Übersetzungseinheit (410) konfiguriert ist, um für eine erste Übersetzungsanforderung ein erstes Synonym in der zweiten Sprache als die Übersetzung für ein erstes Wort oder einen ersten Ausdruck auszuwählen, das in dem Text in der ersten Sprache beinhaltet ist, und konfiguriert ist, um für eine zweite Übersetzungsanforderung ein zweites Synonym in der zweiten Sprache durch Bezugnehmen auf eine Synonymdatenbank auszuwählen, die Synonyme von Wörtern und Ausdrücken in der zweiten Sprache speichert;
das Übersetzungssystem ferner eine Bewertungsaktualisierungseinheit (1110) zum Empfangen, von einem ersten Benutzerendgerät, auf dem eine erste Webseite umfasst, die das erste Synonym beinhaltet, das basierend auf der ersten Übersetzungsanforderung angezeigt wird, erster Verhaltensinformationen, die das Verhalten des Benutzers auf der ersten Webseite angeben, und zum Empfangen zweiter Verhaltensinformationen, von einem zweiten Benutzerendgerät, auf dem eine zweite Webseite, die das zweite Synonym beinhaltet, basierend auf der zweiten Übersetzungsanforderung angezeigt wird, die das Verhalten des Benutzers auf der zweiten Webseite angeben; und
wobei die Bewertungsaktualisierungseinheit (1110) konfiguriert ist, um eine Bewertungsdatenbank (1010) zu aktualisieren, die die Bewertung für das erste Synonym und das zweite Synonym basierend auf den ersten Verhaltensinformationen und den zweiten Verhaltensinformationen speichert.

4. Übersetzungssystem (30) nach Anspruch 3, wobei die Bewertung für das erste Synonym höher als die Bewertung für das zweite Synonym ist, und das Verhältnis, in dem das erste Synonym ausgewählt wird, höher als das Verhältnis ist, in dem das zweite Synonym ausgewählt wird.

5. Übersetzungsverfahren, umfassend die computerausgeführten Schritte:
Empfangen (S603) einer Übersetzungsanforderung von einem Webserver (10) oder einem Benutzerendgerät (20), wobei die Übersetzungsanforderung einen einheitlichen Ressourcenanzeiger (URL) einer Webseite beinhaltet, in der Text in einer ersten Sprache angezeigt wird;
Übersetzen (S604) des Texts in der ersten Sprache, der in der Webseite beinhaltet ist, die durch den URL in Text in einer zweiten Sprache durch Bezugnehmen auf eine zweisprachige Datenbank (220) angegeben wird, die Wörter und Ausdrücke in der ersten Sprache speichert, die Wörtern und Ausdrücken in der zweiten Sprache zugeordnet sind, der den übersetzten Text der Wörter und der Ausdrücke in der ersten Sprache darstellt;
Senden (S605) des übersetzten Texts in der zweiten Sprache an den Webserver (10) oder das Benutzerendgerät (20);
Empfangen (S902), von dem Benutzerendgerät (20), von nicht übersetztem Text in der ersten Sprache, die in der Webseite beinhaltet ist, die in die zweite Sprache übersetzt wird, wobei der nicht übersetzte Text durch ein Skript erkannt wird, das in die Webseite eingebettet ist, die auf dem Benutzerendgerät (20) auf der Webseite ausgeführt wird, die dynamisch aktualisiert wird; und
Zuordnen eines Worts oder eines Ausdrucks in der ersten Sprache, die dem nicht übersetzten Text entspricht, eines Worts oder eines Ausdrucks in der zweiten Sprache, die eine Übersetzung des Worts oder des Ausdrucks in der ersten Sprache darstellt, und Registrieren (S903) der Zuordnung in der zweisprachigen Datenbank (220),
wobei URLs in der zweisprachigen Datenbank (220) beinhaltet sind, wobei die URLs Wörter und Ausdrücke in der ersten Sprache Wörtern und Ausdrücken in der zweiten Sprache zuordnen, wobei dadurch Übersetzungen für die URLs angepasst werden, die in der zweisprachigen Datenbank (220) beinhaltet sind; und
die Übersetzungseinheit (410) zum Übersetzen von Text in der ersten Sprache in Text in der zweiten Sprache basierend auf den Wörtern und Ausdrücken in der ersten Sprache und den Wörtern und Ausdrücken in der zweiten Sprache dient, die in der zweisprachigen Datenbank durch den URL zugeordnet werden, der in der Übersetzungsanforderung beinhaltet ist.

## Revendications

1. Système de traduction (30) comprenant :
une unité de réception de demande de traduction (400) destinée à recevoir, depuis un serveur Web (10) ou un terminal utilisateur (20), une demande de traduction comportant un localisateur de ressources uniforme, URL, d'une page Web dans laquelle est affiché du texte dans une première langue ;
une unité de traduction (410) destinée à traduire le texte dans la première langue inclus dans la page Web indiquée par l'URL en texte dans une seconde langue en se référant à une base de données bilingue (220) stockant des mots et des groupes syntaxiques dans la première langue associée à des mots et des groupes syntaxiques dans la seconde langue constituant le texte traduit des mots et des groupes syntaxiques dans la première langue ;
une unité d'envoi de traduction (420) destinée à envoyer le texte traduit dans la seconde langue au serveur Web (10) ou au terminal utilisateur (20) ;
une unité de réception de texte non traduit (800) destinée à recevoir, depuis le terminal utilisateur (20), du texte non traduit dans la première langue inclus dans la page Web traduite dans la seconde langue, le texte non traduit étant détecté par un script intégré dans la page Web exécutée sur le terminal utilisateur (20) sur la page Web mise à jour dynamiquement ; et
une unité de mise à jour de traduction (810) destinée à associer un mot ou un groupe syntaxique dans la première langue correspondant au texte non traduit à un mot ou un groupe syntaxique dans la seconde langue constituant une traduction du mot ou du groupe syntaxique dans la première langue et à enregistrer l'association dans la base de données bilingue (220) ;
dans lequel des URL sont inclus dans la base de données bilingue (220), les URL associant des mots et des groupes syntaxiques dans la première langue à des mots et des groupes syntaxiques dans la seconde langue, pour ainsi personnaliser les traductions pour les URL incluses dans la base de données bilingue (220) ; et
l'unité de traduction (410) sert à traduire du texte dans la première langue en texte dans la seconde langue sur la base des mots et des groupes syntaxiques dans la première langue et des mots et des groupes syntaxiques dans la seconde langue associés dans la base de données bilingue par l'URL incluse dans le demande de traduction.

2. Système de traduction (30) selon la revendication 1, dans lequel un code de langue indiquant la langue cible de traduction est inclus dans la demande de traduction, et l'unité de traduction sert à traduire le texte dans la première langue en texte dans la seconde langue indiquée par le code de langue.

3. Système de traduction (30) selon la revendication 1 ou la revendication 2, dans lequel :
l'unité de traduction (410) est configurée pour sélectionner, pour une première demande de traduction, un premier synonyme dans la seconde langue comme traduction d'un premier mot ou d'un groupe syntaxique inclus dans le texte dans la première langue, et est configurée pour sélectionner, pour une seconde demande de traduction, un second synonyme dans la seconde langue, en faisant référence à une base de données de synonymes stockant des synonymes de mots et de groupes syntaxiques dans la seconde langue ;
le système de traduction comprend en outre une unité de mise à jour de score (1110) destiné à recevoir, depuis un premier terminal utilisateur sur lequel une première page Web comportant le premier synonyme est affichée sur la base de la première demande de traduction, des premières informations de comportement indiquant le comportement de l'utilisateur sur une première page Web, et à recevoir, depuis un second terminal utilisateur sur lequel une seconde page Web comportant le second synonyme est affichée sur la base de la seconde demande de traduction, des secondes informations de comportement indiquant le comportement de l'utilisateur sur la seconde page Web ; et
dans lequel l'unité de mise à jour de score (1110) est configurée pour mettre à jour une base de données de scores (1010) stockant le score pour le premier synonyme et le second synonyme sur la base des premières informations de comportement et des secondes informations de comportement.

4. Système de traduction (30) selon la revendication 3, dans lequel le score pour le premier synonyme est supérieur au score pour le second synonyme, et le rapport auquel le premier synonyme est sélectionné est supérieur au rapport auquel le second synonyme est sélectionné.

5. Procédé de traduction comprenant les étapes exécutées par ordinateur consistant à :
recevoir (S603) une demande de traduction depuis un serveur Web (10) ou un terminal utilisateur (20), la demande de traduction comportant un localisateur de ressources uniforme, URL, d'une page Web dans laquelle du texte est affiché dans une première langue ;
traduire (S604) le texte dans la première langue inclus dans la page Web indiquée par l'URL en texte dans une seconde langue en se référant à une base de données bilingue (220) stockant des mots et des groupes syntaxiques dans la première langue associés à des mots et des groupes syntaxiques dans la seconde langue constituant le texte traduit des mots et des groupes syntaxiques dans la première langue ;
envoyer (S605) le texte traduit dans la seconde langue au serveur Web (10) ou au terminal utilisateur (20) ;
recevoir (S902), depuis le terminal utilisateur (20), du texte non traduit dans la première langue inclus dans la page Web traduite dans la seconde langue, le texte non traduit étant détecté par un script intégré dans la page Web exécuté sur le terminal utilisateur (20) sur la page Web mise à jour dynamiquement ; et
associer un mot ou un groupe syntaxique dans la première langue correspondant au texte non traduit à un mot ou un groupe syntaxique dans la seconde langue constituant une traduction du mot ou un groupe syntaxique dans la première langue et enregistrer (S903) l'association dans la base de données bilingue (220),
dans lequel des URL sont inclus dans la base de données bilingue (220), les URL associant des mots et des groupes syntaxiques dans la première langue à des mots et des groupes syntaxiques dans la seconde langue, pour ainsi personnaliser les traductions pour les URL incluses dans la base de données bilingue (220) ; et
l'unité de traduction (410) sert à traduire du texte dans la première langue en texte dans la seconde langue sur la base des mots et des groupes syntaxiques dans la première langue et des mots et des groupes syntaxiques dans la seconde langue associés dans la base de données bilingue par l'URL incluse dans le demande de traduction.
